(19) Europäisches Patentamt
European Patent Office
Office européen des brevets

(11) EP 4 471 962 A1

(12) # EUROPEAN PATENT APPLICATION
published in accordance with Art. 153(4) EPC

(43) Date of publication:
**04.12.2024 Bulletin 2024/49**

(21) Application number: **22924024.7**

(22) Date of filing: **25.10.2022**

(51) International Patent Classification (IPC):
***H01M 50/403*** *(2021.01)* ***C08F 214/26*** *(2006.01)*
***H01M 50/411*** *(2021.01)* ***H01M 50/426*** *(2021.01)*
***H01M 50/449*** *(2021.01)*

(52) Cooperative Patent Classification (CPC):
**C08F 214/26; H01M 50/403; H01M 50/411; H01M 50/426; H01M 50/449;** Y02E 60/10

(86) International application number:
**PCT/JP2022/039692**

(87) International publication number:
**WO 2023/145169 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.01.2022 JP 2022010294**

(71) Applicant: **DAIKIN INDUSTRIES, LTD.**
**Osaka-shi, Osaka 530-0001 (JP)**

(72) Inventors:
- **FUKUSHIMA, Kanta**
  **Osaka-shi, Osaka 530-0001 (JP)**
- **YANO, Ryouichi**
  **Osaka-shi, Osaka 530-0001 (JP)**
- **IGUCHI, Takashi**
  **Osaka-shi, Osaka 530-0001 (JP)**
- **ASANO, Kazuya**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(54) **COMPOSITION, POLYMER AND MULTILAYER BODY**

(57) Provided is a composition for coating a separator for an electrochemical device, wherein the composition contains a polymer containing trifluoroethylene unit, a content of the trifluoroethylene unit in the polymer is 57 to 100 mol% based on all monomer units, and when the polymer contains an other monomer unit other than the trifluoroethylene unit, the other monomer includes at least tetrafluoroethylene, or tetrafluoroethylene and at least one monomer (α) selected from the group consisting of a fluorinated monomer, excluding trifluoroethylene and tetrafluoroethylene, and a polar group-containing monomer.

EP 4 471 962 A1

## Description

TECHNICAL FIELD

The present disclosure relates to a composition for coating a separator for an electrochemical device, a separator for an electrochemical device, an electrochemical device, a lithium ion secondary battery, a polymer, and a laminated product.

BACKGROUND ART

Patent Document 1 discloses that a fluorinated copolymer based on trifluoroethylene (VF3) and tetrafluoroethylene ($C_2F_4$) and having improved heat resistance is used as a substrate coating and/or an ultraflexible material.

Patent Document 2 discloses an organic/inorganic composite porous separator, which comprises: (a) a polyolefin-based separator substrate; and (b) an active layer formed by coating at least one region selected from the group consisting of a surface of the substrate and a part of pores present in the substrate with a mixture of inorganic particles and a binder polymer, wherein the inorganic particles in the active layer are interconnected among themselves by the binder polymer, and spaces among the inorganic particles form a pore structure.

RELATED ART

PATENT DOCUMENTS

Patent Document 1: Japanese Patent Laid-Open No. 8-231645
Patent Document 2: Japanese Translation of PCT International Application Publication No. 2008-524824

SUMMARY

An object of the present disclosure is to provide a composition for coating a separator for an electrochemical device, wherein the composition can easily coat the separator, can form a coating having excellent electrolyte resistance, and can improve the heat shrinkage resistance of the resulting separator.

In addition, another object of the present invention is to provide a polymer that can form a coating having excellent electrolyte resistance and can improve the heat shrinkage resistance of a separator.

In addition, yet another object of the present invention is to provide a laminated product that can be produced with high productivity, includes a coating layer having excellent electrolyte resistance, and has excellent heat shrinkage resistance.

MEANS FOR SOLVING THE PROBLEM

According to the present disclosure, provided is a composition for coating a separator for an electrochemical device, wherein the composition comprises a polymer comprising trifluoroethylene unit, a content of trifluoroethylene unit in the polymer is 57 to 100 mol% based on all monomer units, and when the polymer comprises an other monomer unit other than trifluoroethylene unit, the other monomer includes at least tetrafluoroethylene, or tetrafluoroethylene and at least one monomer ($\alpha$) selected from the group consisting of a fluorinated monomer, excluding trifluoroethylene and tetrafluoroethylene, and a polar group-containing monomer.

In the composition of the present disclosure, the fluorinated monomer is preferably at least one selected from the group consisting of chlorotrifluoroethylene, 2,3,3,3-tetrafluoropropene, hexafluoropropylene, and a fluoroalkyl vinyl ether.

In the composition of the present disclosure, the polar group-containing monomer is preferably at least one selected from the group consisting of (meth)acrylic acid, 3-butenoic acid, 4-pentenoic acid, 2-carboxyethyl acrylate, hydroxyethyl acrylate, 2-hydroxypropyl acrylate, acryloyloxyethyl succinate, and a salt thereof.

In the composition of the present disclosure, the polymer is preferably at least one selected from the group consisting of a polymer consisting of trifluoroethylene unit and tetrafluoroethylene unit and a polymer comprising trifluoroethylene unit, tetrafluoroethylene unit, and a monomer ($\alpha$) unit.

In the composition of the present disclosure, preferably, the total content of trifluoroethylene unit and tetrafluoroethylene unit in the polymer is 90 to 100 mol% based on all monomer units, and the content of the monomer ($\alpha$) unit is 10 to 0 mol% based on all monomer units.

In the composition of the present disclosure, the polymer is preferably free of vinylidene fluoride unit.

The composition of the present disclosure preferably further comprises a solvent.

In addition, according to the present disclosure, a separator for an electrochemical device, including a substrate and a coating layer formed from the composition is provided.

In the separator for an electrochemical device of the present disclosure, the substrate is preferably formed from an organic material.

In addition, according to the present disclosure, an electrochemical device including the separator for an electrochemical device is provided.

In addition, according to the present disclosure, a lithium ion secondary battery including the separator for an electrochemical device is provided.

In addition, according to the present disclosure, provided is a polymer comprising trifluoroethylene unit, tetrafluoroethylene unit, and a monomer ($\alpha$) unit, wherein the monomer ($\alpha$) is at least one polymer selected from the group consisting of a fluorinated monomer, excluding trifluoroethylene and tetrafluoroethylene, and a polar group-containing monomer.

In the polymer of the present disclosure, the content of trifluoroethylene unit in the copolymer is preferably 57 to 99 mol% based on all monomer units.

In the polymer of the present disclosure, preferably, the total content of trifluoroethylene unit and tetrafluoroethylene unit in the polymer is 90 to 99.99 mol% based on all monomer units, and the content of the monomer ($\alpha$) unit is 10 to 0.01 mol based on all monomer units.

In addition, according to the present disclosure, provided is a laminated product including a substrate formed from an organic material and a coating layer formed from a composition, wherein the composition comprises a polymer comprising trifluoroethylene unit, a content of the trifluoroethylene unit in the polymer is 57 to 100 mol% based on all monomer units, and when the polymer comprises an other monomer unit other than the trifluoroethylene unit, the other monomer includes at least tetrafluoroethylene, or tetrafluoroethylene and at least one monomer ($\alpha$) selected from the group consisting of a fluorinated monomer, excluding trifluoroethylene and tetrafluoroethylene, and a polar group-containing monomer.

## EFFECTS OF INVENTION

According to the present disclosure, it is possible to provide a composition for coating a separator for an electrochemical device, wherein the composition can easily coat the separator, can form a coating having excellent electrolyte resistance, and can improve the heat shrinkage resistance of the resulting separator.

In addition, according to the present invention, it is possible to provide a polymer that can form a coating having excellent electrolyte resistance and can improve the heat shrinkage resistance of a separator.

In addition, according to the present invention, it is possible to provide a laminated product that can be produced with high productivity, includes a coating layer having excellent electrolyte resistance, and has excellent heat shrinkage resistance.

## DESCRIPTION OF EMBODIMENTS

Hereinafter, specific embodiments of the present disclosure will be described in detail, but the present disclosure is not limited to the following embodiments.

A lithium ion secondary battery has a basic structure in which a non-aqueous electrolyte is disposed between a positive electrode and a negative electrode, via a separator if necessary. The separator is interposed between the positive electrode and the negative electrode to prevent contact between the active materials of both electrodes, and forms an ion conduction path between the electrodes by causing an electrolyte to flow through the pores of the separator. In addition, the separator is required to have the function of blocking an excessive current (shutdown function) by interrupting an abnormal current flowing in the battery due to a cause such as a short circuit between the positive electrode and the negative electrode, and when the normal battery operating temperature is exceeded, the separator closes the microporous membrane to achieve shutdown.

Conventionally, porous membranes such as a microporous polyolefin film formed from polyethylene, polypropylene, or the like have been generally used as separators. However, these polyolefin-based porous membranes have high heat shrinkability, and thus have the problem of low dimensional stability at a high temperature, and when the internal temperature of a lithium ion secondary battery rises even after the pores in the separator are closed by abnormal heating in the battery, this may cause a concern that the separator may undergo heat shrinkage and breakage to cause an internal short circuit, leading to fire or the like. In order to improve the safety of a battery under such a high temperature, there is a demand for improvement of the heat shrinkage resistance of the separator.

Further, when a technique for coating a separator is used, as disclosed in Patent Document 2, there is a demand for a technique that can easily coat the separator and can form a coating having excellent electrolyte resistance so that the

coating will not swell or dissolve even when contacted with the electrolyte used in a lithium ion secondary battery.

The present inventors have carried out intensive studies and found that when the monomer formulation of a polymer is appropriately selected, the polymer sufficiently dissolves in a solvent such as N-methyl-2-pyrrolidone to make it possible to prepare a composition having an appropriate viscosity, and that by using a polymer having an appropriately selected monomer formulation, a coating having excellent electrolyte resistance can be formed and the heat shrinkage resistance of the resulting separator can be improved.

That is, the composition of the present disclosure is a composition for coating a separator for an electrochemical device and contains a polymer having a specific monomer formulation, and by using the composition of the present disclosure, a separator can be easily coated, a coating having excellent electrolyte resistance can be formed, and the heat shrinkage resistance of the resulting separator can be improved.

(Polymer)

The composition of the present disclosure contains a polymer containing trifluoroethylene unit.

The polymer may be a homopolymer consisting of trifluoroethylene unit in some embodiments, or a copolymer comprising trifluoroethylene unit and an other monomer unit other than trifluoroethylene unit in other embodiments. The composition of the present disclosure can contain one or two or more polymers comprising trifluoroethylene unit.

The content of the trifluoroethylene unit in the polymer is 57 to 100 mol%, preferably 60 mol% or more, more preferably 62 mol% or more, further preferably 65 mol% or more, and preferably 99 mol% or less, more preferably 98 mol% or less, based on all monomer units. By setting the content of the trifluoroethylene unit to 62 mol% or more, preferably 65 mol% or more, the heat shrinkage resistance of the separator is further improved.

The content of the other monomer unit in the polymer is preferably 0 to 43 mol%, more preferably 40 mol% or less, further preferably 38 mol% or less, particularly preferably 35 mol% or less, and more preferably 1 mol% or more, further preferably 2 mol% or more, based on all monomer units.

When the polymer contains an other monomer unit, the other monomer may be a fluorinated monomer in some embodiments, or a non-fluorinated monomer in other embodiments. When the polymer used in the composition of the present disclosure contains an other monomer unit, the other monomer needs to include at least tetrafluoroethylene, or tetrafluoroethylene and at least one monomer ($\alpha$) selected from the group consisting of a fluorinated monomer, excluding trifluoroethylene and tetrafluoroethylene, and a polar group-containing monomer. As described above, by using a polymer comprising tetrafluoroethylene (TFE) unit as an other monomer unit together with trifluoroethylene unit, a coating having superior electrolyte resistance can be formed, and the heat shrinkage resistance of the resulting separator can be further improved.

The polymer is preferably at least one selected from the group consisting of a polymer consisting of trifluoroethylene unit and tetrafluoroethylene unit and a polymer comprising trifluoroethylene unit, tetrafluoroethylene unit, and a monomer ($\alpha$) unit.

The content of the tetrafluoroethylene unit in the polymer is preferably 0 to 43 mol%, more preferably 40 mol% or less, further preferably 38 mol% or less, particularly preferably 35 mol% or less, and more preferably 1 mol% or more, further preferably 2 mol% or more, based on all monomer units.

When the polymer contains trifluoroethylene unit and tetrafluoroethylene unit, preferably, the total content of the trifluoroethylene unit and the tetrafluoroethylene unit in the polymer is 90 to 100 mol% based on all monomer units, and the content of the monomer ($\alpha$) unit is 10 to 0 mol% based on all monomer units.

The total content of the trifluoroethylene unit and the tetrafluoroethylene unit is more preferably 90 to 99.99 mol%, further preferably 92 mol% or more, particularly preferably 94 mol% or more, and further preferably 99 mol% or less, particularly preferably 98 mol% or less.

The content of the monomer ($\alpha$) unit is more preferably 10 to 0.01 mol, further preferably 8 mol% or less, particularly preferably 6 mol% or less, and further preferably 1 mol% or more, particularly preferably 2 mol% or more.

Examples of the fluorinated monomer excluding trifluoroethylene and tetrafluoroethylene include vinylidene fluoride (VdF), vinyl fluoride, chlorotrifluoroethylene (CTFE), fluoroalkyl vinyl ether, hexafluoropropylene (HFP), (perfluoroalkyl)ethylene, 2,3,3,3-tetrafluoropropene, and trans-1,3,3,3-tetrafluoropropene.

The fluoroalkyl vinyl ether is preferably fluoroalkyl vinyl ether having a fluoroalkyl group having 1 to 5 carbon atoms, and more preferably at least one selected from the group consisting of perfluoro(methyl vinyl ether), perfluoro(ethyl vinyl ether), and perfluoro(propyl vinyl ether).

The fluorinated monomer is, among those, preferably at least one selected from the group consisting of VdF, CTFE, 2,3,3,3-tetrafluoropropene, HFP, and fluoroalkyl vinyl ether, more preferably at least one selected from the group consisting of CTFE, 2,3,3,3-tetrafluoropropene, HFP, and fluoroalkyl vinyl ether.

The fluorinated monomer may or may not have a polar group. The fluorinated monomer may be a fluorinated monomer having a polar group.

The content of the VdF unit in the polymer is preferably small from the viewpoint of being able to form a coating

having superior electrolyte resistance. The content of the VdF unit in the polymer is preferably less than 40 mol%, more preferably less than 30 mol%, further preferably less than 20 mol%, particularly preferably less than 10 mol%, and preferably 0 mol% or more, more preferably 1 mol% or more, based on all monomer units. The polymer is also preferably free of a VdF unit.

Examples of the non-fluorinated monomer include a non-fluorinated monomer having no polar group such as ethylene or propylene, and a non-fluorinated monomer having a polar group. Hereinafter, a fluorinated monomer having a polar group and a non-fluorinated monomer having a polar group may be collectively referred to as a polar group-containing monomer.

When an other monomer having a polar group is used, the polar group is introduced into the polymer, and this allows excellent adhesion between the substrate and the coating layer to be obtained. The polar group is preferably at least one selected from the group consisting of a carbonyl group-containing group, an epoxy group, a hydroxy group, a sulfonic acid group, a sulfuric acid group, a phosphoric acid group, an amino group, an amide group, and an alkoxy group, more preferably at least one selected from the group consisting of a carbonyl group-containing group, an epoxy group, and a hydroxy group, and further preferably a carbonyl group-containing group. The hydroxy group does not include a hydroxy group constituting a part of the carbonyl group-containing group. In addition, the amino group is a monovalent functional group obtained by removing hydrogen from ammonia or a primary or secondary amine.

The carbonyl group-containing group is a functional group having a carbonyl group (-C(=O)-). The carbonyl group-containing group is preferably a group represented by the general formula: -COOR wherein R represents a hydrogen atom, an alkyl group, or a hydroxyalkyl group, or a carboxylic anhydride group, and more preferably a group represented by the general formula: -COOR. The number of carbon atoms of each of the alkyl group and the hydroxyalkyl group is preferably 1 to 16, more preferably 1 to 6, and further preferably 1 to 3. Specific examples of the group represented by the general formula: -COOR include $-COOCH_2CH_2OH$, $-COOCH_2CH(CH_3)OH$, $-COOCH(CH_3)CH_2OH$, -COOH, $-COOCH_3$, and $-COOC_2H_5$. When the group represented by the general formula: -COOR is -COOH or includes -COOH, in some embodiments, -COOH is a carboxylate such as a metal carboxylate or ammonium carboxylate.

In addition, in some embodiments, the carbonyl group-containing group may be a group represented by the general formula: -X-COOR wherein X is an atomic group having a main chain composed of 1 to 20 atoms and having a molecular weight of 500 or less and R represents a hydrogen atom, an alkyl group, or a hydroxyalkyl group. The number of carbon atoms of each of the alkyl group and the hydroxyalkyl group is preferably 1 to 16, more preferably 1 to 6, and further preferably 1 to 3.

The amide group is preferably a group represented by the general formula: -CO-NRR' wherein R and R' each independently represent a hydrogen atom or a substituted or unsubstituted alkyl group, or a bond represented by the general formula: -CO-NR"- wherein R" represents a hydrogen atom, a substituted or unsubstituted alkyl group, or a substituted or unsubstituted phenyl group.

Examples of the above polar group-containing monomer include a hydroxyalkyl (meth)acrylate such as hydroxyethyl acrylate or 2-hydroxypropyl acrylate; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, acryloyloxypropyl succinate, methacryloyloxyethyl succinate, acryloyloxyethyl phthalate, or methacryloyloxyethyl phthalate; a monoester of an unsaturated dibasic acid such as monomethyl maleate, monoethyl maleate, monomethyl citraconate, or monoethyl citraconate; a monomer (4) represented by a general formula (4):

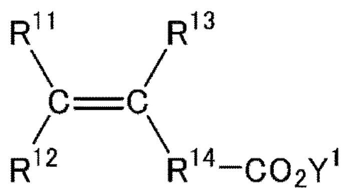

wherein $R^{11}$ to $R^{13}$ each independently represent a hydrogen atom or a hydrocarbon group having 1 to 8 carbon atoms, $R^{14}$ represents a single bond or a hydrocarbon group having 1 to 8 carbon atoms, and $Y^1$ represents an inorganic cation and/or an organic cation; and an unsaturated dibasic acid such as maleic acid, maleic anhydride, citraconic acid, or citraconic anhydride.

The polar group-containing monomer unit that the polymer can contain is preferably a unit based on the monomer (4) represented by the general formula (4).

In the general formula (4), $Y^1$ represents an inorganic cation and/or an organic cation. Examples of the inorganic cation include a cation such as H, Li, Na, K, Mg, Ca, Al, or Fe. Examples of the organic cation include a cation such as $NH_4$, $NH_3R^{15}$, $NH_2R^{15}_2$, $NHR^{15}_3$, or $NR^{15}_4$ wherein $R^{15}$ independently represents an alkyl group having 1 to 4 carbon atoms. $Y^1$ is preferably H, Li, Na, K, Mg, Ca, Al, or $NH_4$, more preferably H, Li, Na, K, Mg, Al, or $NH_4$, further preferably H, Li, Al, or $NH_4$,

and particularly preferably H. Specific examples of the inorganic cation and the organic cation are described by omitting their signs and valences for convenience.

In the general formula (4), $R^{11}$ to $R^{13}$ each independently represent a hydrogen atom or a hydrocarbon group having 1 to 8 carbon atoms. The hydrocarbon group is a monovalent hydrocarbon group. The hydrocarbon group preferably has 4 or less carbon atoms. Examples of the hydrocarbon group include an alkyl group, an alkenyl group, and an alkynyl group having the above number of carbon atoms, and a methyl group or an ethyl group is preferable. $R^{11}$ and $R^{12}$ are preferably each independently a hydrogen atom, a methyl group, or an ethyl group, and $R^{13}$ is preferably a hydrogen atom or a methyl group.

In the general formula (4), $R^{14}$ represents a single bond or a hydrocarbon group having 1 to 8 carbon atoms. The hydrocarbon group is a divalent hydrocarbon group. The hydrocarbon group preferably has 4 or less carbon atoms. Examples of the hydrocarbon group include an alkylene group and an alkenylene group having the above number of carbon atoms, and among these, at least one selected from the group consisting of a methylene group, an ethylene group, an ethylidene group, a propylidene group, and an isopropylidene group is preferable, and a methylene group is more preferable.

The monomer (4) is preferably at least one selected from the group consisting of (meth)acrylic acid and a salt thereof, vinylacetic acid (3-butenoic acid) and a salt thereof, 3-pentenoic acid and a salt thereof, 4-pentenoic acid and a salt thereof, 3-hexenoic acid and a salt thereof, 4-heptenoic acid and a salt thereof, and 5-hexenoic acid and a salt thereof.

From the viewpoint of being able to obtain excellent adhesion between the substrate and the coating layer, the polymer preferably further contains a monomer (3) unit represented by a general formula (3) as an other monomer unit.

General formula (3):

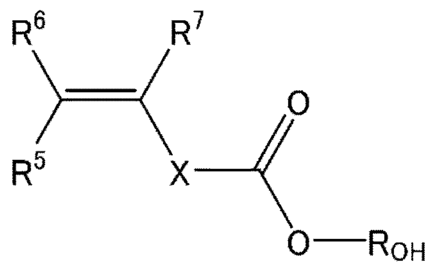

wherein $R^5$ to $R^7$ are each independently H, F, $CH_3$, or $CF_3$, X is a single bond or an atomic group having a main chain composed of 1 to 20 atoms and having a molecular weight of 500 or less, and $R_{OH}$ is H or a $C_1$ to $C_5$ hydrocarbon group containing at least one OH.

$R^5$ to $R^7$ are each independently H, F, $CH_3$, or $CF_3$. $R^5$ to $R^7$ are each preferably H or $CH_3$.

X is a single bond or an atomic group having a main chain composed of 1 to 20 atoms and having a molecular weight of 500 or less.

The number of atoms in the main chain of the atomic group is 1 to 20, preferably 1 to 14, further preferably 1 to 8, and particularly preferably 1 to 7. The number of atoms in the main chain of the atomic group means the number of atoms in the skeleton portion of a chain that connects an unsaturated bond ($CR^5R^6=CR^7$-) and a carbonyl group (-C(=O)-) with the smallest number of atoms.

The molecular weight of the atomic group is preferably 450 or less, more preferably 390 or less, further preferably 340 or less, and preferably 14 or more, more preferably 20 or more, further preferably 28 or more.

The atomic group is preferably a divalent group represented by any of the following formulas, from the viewpoint of being able to obtain an electrode mixture that is further unlikely to increase in viscosity and being able to obtain a coating layer that is superior in adhesion to the substrate.

General formula (3a) : $*-L^1-$

wherein *- is a bond that bonds to the unsaturated bond ($CR^5R^6=CR^7$-), and $L^1$ is an alkylene group having 1 to 20 carbon atoms.

General formula (3b) : $*-CO-L^2-$

wherein *- is a bond that bonds to the unsaturated bond ($CR^5R^6=CR^7$-), and $L^2$ is an alkylene group having 1 to 19 carbon atoms.

General formula (3c) : *-O-$L^3$-

wherein *- is a bond that bonds to the unsaturated bond ($CR^5R^6=CR^7$-), and $L^3$ is an alkylene group having 1 to 19 carbon atoms.

General formula (3d) : *-COO-$L^4$-

wherein *- is a bond that bonds to the unsaturated bond ($CR^5R^6=CR^7$-), and $L^4$ is an alkylene group having 1 to 18 carbon atoms.

General formula (3e) : *-COO-$L^5$-OCO-$L^6$-

wherein *- is a bond that binds to the unsaturated bond ($CR^5R^6=CR^7$-), $L^5$ and $L^6$ are each independently an alkylene group, and the total number of carbon atoms of $L^5$ and $L^6$ is 2 to 16.

The atomic group is preferably at least one selected from the group consisting of a divalent group represented by the general formula (3a), a divalent group represented by the general formula (3c), a divalent group represented by the general formula (3d), and a divalent group represented by the general formula (3e), and more preferably at least one selected from the group consisting of a divalent group represented by the general formula (3c), a divalent group represented by the general formula (3d), and a divalent group represented by the general formula (3e).

$L^1$ to $L^6$ are each independently preferably an alkylene group having 1 to 10 carbon atoms, more preferably an alkylene group having 1 to 4 carbon atoms, further preferably an alkylene group having 1 to 3 carbon atoms, and particularly preferably a methylene group or an ethylene group.

$R_{OH}$ is H or a $C_1$ to $C_5$ hydrocarbon group containing at least one OH. $R_{OH}$ is preferably H. The carboxyl group (-COOH) formed when $R_{OH}$ is H may form a salt together with a cation such as Li, Na, K, Mg, Ca, Al, or $NH_4$.

Examples of the monomer (3) include an unsaturated monocarboxylic acid having 3 to 6 carbon atoms such as (meth)acrylic acid, vinylacetic acid (3-butenoic acid), 3-pentenoic acid, 4-pentenoic acid, 3-hexenoic acid, 4-heptenoic acid, or 5-hexenoic acid; a vinyl carboxyalkyl ether having 3 to 6 carbon atoms such as vinyl carboxymethyl ether or vinyl carboxyethyl ether; a carboxyalkyl (meth)acrylate having 5 to 12 carbon atoms such as acryloyloxyethyl succinate carboxyethyl acrylate or 2-carboxyethyl methacrylate; a (meth)acryloyloxyalkyl dicarboxylate ester having 7 to 16 carbon atoms such as acryloyloxyethyl succinate, acryloyloxypropyl succinate, methacryloyloxyethyl succinate, acryloyloxyethyl phthalate, or methacryloyloxyethyl phthalate; and salts thereof.

The monomer (3) is, among these, preferably at least one selected from the group consisting of (meth)acrylic acid, 3-butenoic acid, 4-pentenoic acid, 2-carboxyethyl acrylate, hydroxyethyl acrylate, 2-hydroxypropyl acrylate, acryloyloxyethyl succinate, and a salt thereof, and more preferably (meth)acrylic acid.

The content of the polar group-containing monomer unit in the polymer is preferably 0.001 to 3.0 mol%, and more preferably 2.0 mol% or less, and more preferably 0.10 mol % or more, further preferably 0.50 mol% or more, based on all monomer units.

Examples of the polymer particularly include

a trifluoroethylene homopolymer,
a trifluoroethylene/TFE copolymer,
a trifluoroethylene/TFE/HFP copolymer,
a trifluoroethylene/TFE/2,3,3,3-tetrafluoropropene copolymer,
a trifluoroethylene/TFE/CTFE copolymer,
a trifluoroethylene/TFE/(meth)acrylic acid copolymer,
a trifluoroethylene/TFE/3-butenoic acid copolymer,
a trifluoroethylene/TFE/4-pentenoic acid copolymer,
a trifluoroethylene/TFE/2-carboxyethyl acrylate copolymer,
a trifluoroethylene/TFE/acryloyloxyethyl succinate copolymer, and
a trifluoroethylene/TFE/HFP/(meth)acrylic acid copolymer.

In the present disclosure, the formulation of the polymer can be measured, for example, by $^{19}F$-NMR measurement. In addition, when the polymer contains a polar group-containing monomer unit as an other monomer unit, the content of the polar group-containing monomer unit, for example where the polar group is an acid group such as a carboxylic acid, can be measured by acid-base titration of the acid group.

The weight average molecular weight, in terms of polystyrene, of the polymer is preferably 10,000 to 3,000,000, more preferably 30,000 or more, further preferably 50,000 or more, particularly preferably 200,000 or more, and more

preferably 2,400,000 or less, further preferably 2,200,000 or less, particularly preferably 2,000,000 or less. The weight average molecular weight can be measured by gel permeation chromatography (GPC) using dimethylformamide as a solvent.

The number average molecular weight, in terms of polystyrene, of the polymer is preferably 7,000 to 1,500,000, more preferably 21,000 or more, further preferably 35,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

The solution viscosity of the polymer is preferably 10 to 4,000 mPa·s, more preferably 50 mPa·s or more, further preferably 100 mPa·s or more, particularly preferably 150 mPa·s or more, and more preferably 3,000 mPa·s or less, further preferably 2,000 mPa·s or less, particularly preferably 1,500 mPa·s or less, most preferably 700 mPa·s or less. Solution viscosity is the viscosity of an N-methyl-2-pyrrolidone (NMP) solution containing 5% by mass of the polymer. The viscosity of the NMP solution can be measured at 25°C by using a B-type viscometer.

The melting point of the polymer is preferably 100 to 245°C, more preferably 150°C or more, further preferably 180°C or more, and particularly preferably 195°C or more. The melting point of the polymer can be determined as the temperature corresponding to the maximum value in the heat of fusion curve when the temperature is raised from 30°C to 300°C at a rate of 10°C/min, then lowered to 30°C at 10°C/min, and raised again to 300°C at a rate of 10°C/min by using a differential scanning calorimetry (DSC) apparatus.

The content of the polymer in the composition is preferably 0.1 to 20% by mass, more preferably 1 to 15% by mass, and further preferably 3 to 12% by mass, based on the mass of the composition.

The polymer can be suitably produced by a production method involving polymerizing trifluoroethylene and, if necessary, an other monomer in a reactor.

Examples of the polymerization method that can be adopted include a method such as suspension polymerization, emulsion polymerization, or solution polymerization, and suspension polymerization and emulsion polymerization are preferable in terms of ease of a post-treatment or the like.

The polymerization temperature is not limited, and is preferably 0 to 95°C, and more preferably 15 to 95°C, from the viewpoint of the polymerization rate and the cost required for temperature control. In particular, the polymerization temperature in suspension polymerization is preferably 15 to 45°C. In particular, the polymerization temperature in emulsion polymerization is 55 to 95°C.

The polymerization pressure is not limited, and is preferably 0.3 to 1 MPaG, more preferably 0.4 MPaG or more, and more preferably 0.8 MPaG or less, from the viewpoint of the polymerization rate and the pressure resistance of the reactor.

In the polymerization, a polymerization initiator, a surfactant, a chain transfer agent, and a solvent can be used, and may each be a conventionally known one. The polymerization initiator may be an oil-soluble radical polymerization initiator or a water-soluble radical polymerization initiator.

In some embodiments, the oil-soluble radical polymerization initiator may be a known oil-soluble peroxide, and representative examples thereof include

a dialkyl peroxycarbonate such as di-normal propyl peroxydicarbonate, diisopropyl peroxydicarbonate, or di-sec-butyl peroxydicarbonate;
a peroxyester such as t-butyl peroxyisobutyrate, t-butyl peroxypivalate, t-hexyl peroxy 2-ethylhexanoate, t-butyl peroxy-2-ethylhexanoate, 1,1,3,3-tetramethylbutyl peroxy-2-ethylhexanoate, or t-amyl peroxypivalate;
a dialkyl peroxide such as di-t-butyl peroxide; and
a di[fluoro(or fluorochloro)acyl] peroxide.

Examples of the di[fluoro(or fluorochloro)acyl] peroxide include a diacyl peroxide represented by $[(RfCOO)-]_2$ wherein Rf is a perfluoroalkyl group, an ω-hydroperfluoroalkyl group, or a fluorochloroalkyl group.

Examples of the di[fluoro(or fluorochloro)acyl] peroxide include di(ω-hydroperfluorohexanoyl) peroxide, di(ω-hydro-dodecafluoroheptanoyl) peroxide, di(ω-hydro-tetradecafluorooctanoyl) peroxide, di(ω-hydro-hexadecafluorononanoyl) peroxide, di(perfluorobutyryl) peroxide, di(perfluoropaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

In some embodiments, the water-soluble radical polymerization initiator may be a known water-soluble peroxide, and examples thereof include an ammonium salt, a potassium salt, or a sodium salt of persulfuric acid, perboric acid, perchloric acid, perphosphoric acid, percarbonic acid, or the like, an organic peroxide such as disuccinic acid peroxide or

diglutaric acid peroxide, t-butyl permaleate, and t-butyl hydroperoxide. A reducing agent such as a sulfite may be used in combination with a peroxide, and the amount thereof used may be 0.1 to 20 times that of the peroxide.

A preferable polymerization method is a method of suspension polymerization in the presence of a peroxide polymerization initiator or a method of emulsion polymerization in the presence of a redox polymerization initiator. Examples of the peroxide polymerization initiator include the oil-soluble peroxides described above. Examples of the redox polymerization initiator include a combination of a peroxide described above and a reducing agent.

The surfactant may be a known surfactant, and examples thereof include a nonionic surfactant, an anionic surfactant, and a cationic surfactant. Among these, a fluorine-containing anionic surfactant is preferable, and a linear or branched fluorine-containing anionic surfactant having 4 to 20 carbon atoms optionally including an ether bond (that is, optionally having an oxygen atom inserted between carbon atoms) is more preferable. The amount of the surfactant added (based on that of the solvent) is preferably 50 to 5,000 ppm.

By polymerization in the presence of a chain transfer agent, the solution viscosity, the weight average molecular weight, or the like of the resulting polymer can be appropriately adjusted. Examples of the chain transfer agent include a hydrocarbon such as ethane, isopentane, n-hexane, or cyclohexane; an aromatic such as toluene or xylene; a ketone such as acetone; an acetate ester such as ethyl acetate or butyl acetate; an alcohol such as methanol or ethanol; a mercaptan such as methyl mercaptan; and a halogenated hydrocarbon such as carbon tetrachloride, chloroform, methylene chloride, or methyl chloride.

The amount of the chain transfer agent added can vary depending on the magnitude of the chain transfer constant of the chain transfer agent, and is usually 0.01 to 20% by mass based on that of the solvent.

Examples of the solvent include water, and a mixed solvent of water and an alcohol.

In polymerization such as suspension polymerization, a fluorine-based solvent may be used in addition to water. Examples of the fluorine-based solvent include a hydrochlorofluoroalkane such as $CH_3CClF_2$, $CH_3CCl_2F$, $CF_3CF_2CCl_2H$, or $CF_2ClCF_2CFHCl$; a chlorofluoroalkane such as $CF_2ClCFClCF_2CF_3$ or $CF_3CFClCFClCF_3$; a perfluoroalkane such as perfluorocyclobutane, $CF_3CF_2CF_2CF_3$, $CF_3CF_2CF_2CF_2CF_3$, or $CF_3CF_2CF_2CF_2CF_2CF_3$; a hydrofluorocarbon such as $CF_2HCF_2CF_2CF_2H$, $CF_3CFHCF_2CF_2CF_3$, $CF_3CF_2CF_2CF_2CF_2H$, $CF_3CF_2CFHCF_2CF_3$, $CF_3CFHCFHCF_2CF_3$, $CF_2HCF_2CF_2CF_2CF_2H$, $CF_2HCFHCF_2CF_2CF_3$, $CF_3CF_2CF_2CF_2CF_2CF_2H$, $CF_3CH(CF_3)CF_3CF_2CF_3$, $CF_3CF(CF_3)CFHCF_2CF_3$, $CF_3CF(CF_3)CFHCFHCF_3$, $CF_3CH(CF_3)CFHCF_2CF_3$, $CF_2HCF_2CF_2CF_2CF_2CF_2H$, $CF_3CF_2CF_2CF_2CH_2CH_3$, or $CF_3CH_2CF_2CH_3$; a (perfluoroalkyl) alkyl ether such as $F(CF_2)_4OCH_3$, $F(CF_2)_4OC_2H_5$, $(CF_3)_2CFOCH_3$, or $F(CF_2)_3OCH_3$; and a hydrofluoroalkyl ether such as $CF_3CH_2OCF_2CHF_2$, $CHF_2CF_2CH_2OCF_2CHF_2$, or $CF_3CF_2CH_2OCF_2CHF_2$, and among these, a perfluoroalkane is preferable. The amount of the fluorine-based solvent used is preferably 10 to 100% by mass based on that of the solvent from the viewpoint of the suspending property and the economic efficiency.

In suspension polymerization, a suspending agent such as methylcellulose, methoxylated methylcellulose, propoxylated methylcellulose, hydroxyethylcellulose, hydroxypropylcellulose, polyvinyl alcohol, polyethylene oxide, and gelatin can be used. The amount of the suspending agent added (based on that of the solvent) is preferably 0.005 to 1.0% by mass, and more preferably 0.01 to 0.4% by mass.

Examples of the polymerization initiator used for suspension polymerization include diisopropyl peroxydicarbonate, di-normal propyl peroxydicarbonate, di-normal heptafluoropropyl peroxydicarbonate, di(secondary butyl) peroxycarbonate, isobutyryl peroxide, di(chlorofluoroacyl) peroxide, di(perfluoroacyl) peroxide, t-butyl peroxypivalate, and t-amyl peroxypivalate. The amount thereof used is preferably 0.1 to 5% by mass based on the total amount of monomers. By adjusting the amount of the polymerization initiator added, the solution viscosity, the weight average molecular weight, or the like of the resulting polymer can be appropriately adjusted.

In suspension polymerization, the degree of polymerization of the resulting polymer may be regulated by adding a chain transfer agent such as ethyl acetate, methyl acetate, acetone, methanol, ethanol, n-propanol, acetaldehyde, propylaldehyde, ethyl propionate, or carbon tetrachloride. The amount thereof used is usually 0.1 to 5% by mass and preferably 0.5 to 3% by mass, based on the total amount of monomers. By adjusting the amount of the chain transfer agent added, the solution viscosity, the weight average molecular weight, or the like of the resulting polymer can be appropriately adjusted.

The total amount of monomers fed is 1:1 to 1:10, and preferably 1:1 to 1:5 in terms of the mass ratio of total amount of monomers to water.

After completion of the polymerization, when an aqueous dispersion including a polymer is obtained by the polymerization reaction, the polymer can be recovered by coagulating, washing, and drying the polymer included in the aqueous dispersion. In addition, when the polymer is obtained as a slurry by the polymerization reaction, the polymer can be recovered by taking out the slurry from the reactor and washing and drying the slurry. The polymer can be recovered in powder form by drying.

(Solvent)

The composition of the present disclosure preferably further contains a solvent.

Examples of the solvent include water and a non-aqueous solvent. Examples of the non-aqueous solvent include a nitrogen-containing organic solvent such as N-methyl-2-pyrrolidone, N,N-dimethylacetamide, or dimethylformamide; a ketone-based solvent such as acetone, methyl ethyl ketone, cyclohexanone, or methyl isobutyl ketone; an ester-based solvent such as ethyl acetate or butyl acetate; an ether-based solvent such as tetrahydrofuran or dioxane; and a low-boiling general-purpose organic solvent such as mixed solvents thereof. The polymer used in the composition of the present disclosure also exhibits good solubility in these solvents, and thus makes the composition of the present disclosure easy to prepare. Further, the resulting composition has an appropriate viscosity.

In addition, the solvent may also be at least one selected from the group consisting of an ester (1) represented by a general formula (1) and a ketone (2) represented by a general formula (2).

General formula (1):

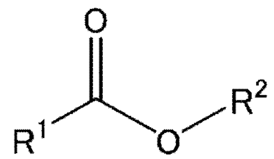

wherein $R^1$ and $R^2$ are each independently H, a $C_1$ to $C_{10}$ linear or branched aliphatic group, or a $C_6$ to $C_{10}$ aromatic group.

General formula (2):

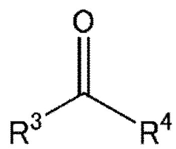

wherein $R^3$ and $R^4$ are each independently H, a $C_1$ to $C_{10}$ linear or branched aliphatic group, or a $C_6$ to $C_{10}$ aromatic group.

$R^1$ and $R^2$ in the general formula (1) are each independently H, a $C_1$ to $C_{10}$ linear or branched aliphatic group, or a $C_6$ to $C_{10}$ aromatic group.

The number of carbon atoms in the aliphatic group for $R^1$ is 1 to 10, preferably 2 or more, more preferably 3 or more, and preferably 7 or less, more preferably 5 or less. The aliphatic group for $R^1$ is preferably an alkyl group. The alkyl group may be linear in some embodiments, or branched in other embodiments.

The number of carbon atoms in the aromatic group for $R^1$ is 6 to 10. A hydrogen atom bonded to a carbon atom of an aromatic ring in the aromatic group may or may not be substituted. Examples of the substituent include an alkyl group such as a methyl group, and a halo group such as a chlorine atom. The aromatic group for $R^1$ is preferably a phenyl group or a benzyl group.

$R^1$ is preferably a $C_1$ to $C_{10}$ linear or branched aliphatic group, more preferably a $C_1$ to $C_{10}$ linear or branched alkyl group or a $C_2$ to $C_{10}$ linear or branched alkenyl group, preferably a methyl group, an ethyl group, a propyl group, a vinyl group, an isopropenyl group, a butyl group, or a pentyl group, and more preferably a propyl group, a butyl group, or a pentyl group. These groups may be linear in some embodiments or branched in other embodiments, and are preferably linear.

The number of carbon atoms in the aliphatic group for $R^2$ is 1 to 10, preferably 3 or more, more preferably 4 or more, and preferably 8 or less, more preferably 6 or less. The aliphatic group for $R^2$ is preferably an alkyl group. The alkyl group may be linear in some embodiments, or branched in other embodiments.

The number of carbon atoms in the aromatic group for $R^2$ is 6 to 10. A hydrogen atom bonded to a carbon atom of an aromatic ring in the aromatic group may or may not be substituted. Examples of the substituent include an alkyl group such as a methyl group, and a halo group such as a chlorine atom. The aromatic group for $R^2$ is preferably a phenyl group or a benzyl group.

$R^2$ is preferably a $C_1$ to $C_{10}$ linear or branched aliphatic group, more preferably a $C_1$ to $C_{10}$ linear or branched alkyl group, preferably a methyl group, an ethyl group, a propyl group, a butyl group, a pentyl group, or a hexyl group, and more preferably a butyl group, a pentyl group, or a hexyl group. These groups may be linear in some embodiments or branched in other embodiments, and are preferably linear.

The ester (1) represented by the general formula (1) is preferably at least one selected from the group consisting

of ethyl acetate, ethyl butyrate, butyl methacrylate, propyl propionate, ethyl butyrate, butyl butyrate, butyl pentanoate, butyl hexanoate, pentyl butyrate, pentyl pentanoate, pentyl hexanoate, hexyl butyrate, hexyl pentanoate, and hexyl hexanoate, and more preferably butyl butyrate.

$R^3$ and $R^4$ in the general formula (2) are each independently H, a $C_1$ to $C_{10}$ linear or branched aliphatic group, or a $C_6$ to $C_{10}$ aromatic group.

The number of carbon atoms in the aliphatic group for $R^3$ and $R^4$ is 1 to 10, preferably 3 or less, and more preferably 2 or less. The aliphatic group for $R^3$ is preferably an alkyl group. The alkyl group may be linear in some embodiments, or branched in other embodiments.

The number of carbon atoms in the aromatic group for $R^3$ and $R^4$ is 6 to 10. A hydrogen atom bonded to a carbon atom in an aromatic ring of the aromatic group may or may not be substituted. Examples of the substituent include an alkyl group such as a methyl group, and a halo group such as a chlorine atom. The aromatic group for $R^3$ and $R^4$ is preferably a phenyl group or a benzyl group.

$R^3$ and $R^4$ are each preferably a $C_1$ to $C_{10}$ linear or branched aliphatic group, more preferably a $C_1$ to $C_{10}$ linear or branched alkyl group, preferably a methyl group, an ethyl group, a propyl group, a butyl group, a pentyl group, or a hexyl group, and more preferably a methyl group or an ethyl group. These groups may be linear in some embodiments or branched in other embodiments, and are preferably linear.

The ketone (2) represented by the general formula (2) is preferably at least one selected from the group consisting of acetone and methyl ethyl ketone.

The composition of the present disclosure, among others, preferably contains a non-aqueous solvent, preferably contains at least one selected from the group consisting of N-methyl-2-pyrrolidone and N,N-dimethylacetamide, dimethylformamide, dimethylsulfoxide, acetone, and methyl ethyl ketone, and more preferably contains N-methyl-2-pyrrolidone, from the viewpoint of excellent stability and applicability of the composition.

(Other component)

The composition of the present disclosure can include an other component other than the polymer. Examples of the other component include an inorganic particle and an organic particle. One embodiment of the composition of the present disclosure contains an inorganic particle. One embodiment of the composition of the present disclosure contains an inorganic particle and an organic particle.

The inorganic particle is preferably at least one selected from the group consisting of a metal oxide particle and a metal hydroxide particle. By including an inorganic particle in the composition of the present disclosure, the heat shrinkage resistance of the separator can be further improved.

The proportion of the polymer to the inorganic particle contained in terms of the mass ratio ((polymer):(inorganic particle)) is preferably 50:50 to 1:99, more preferably 30:70 to 2:98, and further preferably 20:80 to 3:97.

The average particle size of the inorganic particle is preferably 25 μm or less, more preferably 10 μm or less, further preferably 5 μm or less, particularly preferably 1 μm or less, and preferably 0.02 μm or more. The average particle size of the inorganic particle is a value obtained by measurement using a transmission electron microscope, a laser type particle size distribution measurement apparatus, or the like.

The metal oxide particle is preferably a metal oxide other than an alkali metal and an alkaline earth metal, and more preferably at least one selected from the group consisting of aluminum oxide, silicon oxide, titanium oxide, vanadium oxide, and copper oxide, from the viewpoint of improving the ion conductivity and the shutdown effect of the separator.

The average particle size of the metal oxide particle is preferably 25 μm or less, more preferably 10 μm or less, further preferably 5 μm or less, particularly preferably 1 μm or less, and preferably 0.02 μm or more. The average particle size of the metal oxide particle is a value obtained by measurement using a transmission electron microscope.

A particularly preferable metal oxide particle is an aluminum oxide particle or a silicon oxide particle having an average particle size of 5 μm or less, from the viewpoint from excellent ion conductivity.

The metal hydroxide particle is preferably at least one selected from the group consisting of magnesium hydroxide, calcium hydroxide, aluminum hydroxide, chromium hydroxide, zirconium hydroxide, and nickel hydroxide, from the viewpoint of improving the ion conductivity and the shutdown effect of the separator.

The average particle size of the metal hydroxide particle is preferably 25 μm or less, more preferably 10 μm or less, further preferably 5 μm or less, particularly preferably 1 μm or less, and preferably 0.02 μm or more. The average particle size of the metal hydroxide particle is a value obtained by measurement using a transmission electron microscope.

The organic particle is preferably a non-conductive crosslinked polymer, and more preferably crosslinked polystyrene, crosslinked polymethacrylate, or crosslinked acrylate.

The content ratio of the polymer to the organic particle in terms of the mass ratio ((polymer):(organic particle)) is preferably 51:49 to 98:2, and more preferably 65:35 to 95:5.

The average particle size of the organic particle is preferably 25 μm or less, more preferably 10 μm or less, further preferably 5 μm or less, particularly preferably 1 μm or less, and preferably 0.02 μm or more. The average particle size of

the organic particle is a value obtained by measurement using a transmission electron microscope.

The composition may also contain an other polymer such as polyacrylate, polymethacrylate, polyacrylonitrile, polyamideimide, acrylic elastomer, a carboxyalkylcellulose, an alkylcellulose, or a hydroxyalkylcellulose.

(Separator for electrochemical device)

A separator for an electrochemical device can be created by using the composition of the present disclosure. The separator for an electrochemical device of the present disclosure includes a substrate and a coating layer formed from the composition.

The substrate and the coating layer may be directly adhered or may be adhered via an other layer, and the coating layer is preferably formed directly on the substrate. A coating layer may be provided only on one side of the substrate, or may be provided on each of both sides thereof. In addition, a coating layer may be provided in such a way as to cover the entire substrate on which the coating layer is to be provided, or may be provided in such a way as to cover only a part of the substrate.

When a coating layer is formed only on one side of the substrate, the weight of the coating layer is preferably in the range of 0.5 to 50.0 g/$m^2$ from the viewpoint of the adhesion to an electrode and the ion conductivity. When a coating layer is formed on each of both sides of the substrate, the weight of the coating layer is preferably 0.1 to 6.0 g/$m^2$.

The thickness of the coating layer is preferably 1 to 5 μm, more preferably 1 to 4 μm, and further preferably 1 to 3 μm. When the thickness of the coating layer is within the above range, it is possible to ensure the membrane breaking strength and the insulation, and the curling of the substrate is unlikely to increase.

The substrate is preferably a porous substrate having a pore or a void inside. Examples of the porous substrate include a microporous film, a porous sheet formed from a fibrous material such as a nonwoven fabric or a paper-like sheet, or a composite coating layer obtained by laminating one or more other porous layers on such a microporous film or porous sheet. The microporous membrane means a membrane that has a large number of micropores inside and has a structure in which these micropores are connected, allowing a gas or a liquid to pass therethrough from one side to the other side.

The material that constitutes the substrate may be an organic material or an inorganic material having electrical insulation. In particular, from the viewpoint of imparting a shutdown function to the substrate, the constituent material of the substrate is preferably an organic material, more preferably a thermoplastic resin, and further preferably at least one selected from the group consisting of polyethylene, polypropylene, polyimide, polyamide, polyamideimide, polyethylene terephthalate, polyester, and polyacetal.

The shutdown function refers to a function that, when the battery temperature rises, melts the thermoplastic resin to close the pores of the substrate and thereby block the movement of ions, preventing thermal runaway of the battery. The thermoplastic resin is suitably a thermoplastic resin having a melting point of less than 200°C, and particularly preferably a polyolefin.

A substrate using a polyolefin is suitably a polyolefin microporous membrane. The polyolefin microporous membrane may be a polyolefin microporous membrane that has sufficient mechanical physical characteristics and ion permeability and is applied to a conventional separator for a non-aqueous secondary battery. Then, the polyolefin microporous membrane preferably includes polyethylene from the viewpoint of having the shutdown function described above.

The weight average molecular weight of the polyolefin is suitably 100,000 to 5,000,000. If the weight average molecular weight is less than 100,000, it may be difficult to ensure sufficient mechanical physical characteristics. In addition, if the weight average molecular weight is more than 5,000,000, the shutdown characteristics may deteriorate and forming may become difficult.

Such a polyolefin microporous membrane can be produced, for example, by the following method. That is, examples of a method for producing the same include a method for forming a microporous membrane, including sequentially carrying out (i) extruding a molten polyolefin resin from a T-die to form a sheet, (ii) subjecting the sheet to a crystallization treatment, (iii) stretching the sheet, and (iv) heat-treating the sheet. In addition, examples thereof also include a method for forming a microporous membrane, including sequentially carrying out (i) melting a polyolefin resin together with a plasticizer such as liquid paraffin, extruding the molten resin from a T-die, and cooling the same to form a sheet, (ii) stretching the sheet, (iii) extracting the plasticizer from the sheet, and (iv) heat-treating the sheet.

The porous sheet formed from a fibrous material may be a porous sheet formed from a fibrous material made of a polyester such as polyethylene terephthalate, a polyolefin such as polyethylene or polypropylene, a heat-resistant polymer such as an aromatic polyamide or polyimide, polyethersulfone, polysulfone, polyetherketone, or polyetherimide, or the like, or from a mixture of such fibrous materials.

The substrate may be a composite substrate having a functional layer further laminated. The composite substrate is preferable in that the functional layer allows a further function to be added. For example, from the viewpoint of imparting heat resistance, the functional layer may be a porous layer formed from a heat-resistant resin or a porous layer formed from a heat-resistant resin and an inorganic filler. Examples of the heat-resistant resin include one or more heat-resistant polymers selected from an aromatic polyamide, polyimide, polyethersulfone, polysulfone, polyetherketone, and polyetherimide. Examples of the inorganic filler that can be suitably used include a metal oxide such as alumina, and a metal hydroxide such as magnesium hydroxide. Examples of a method for composite formation include a method involving coating a porous sheet with a functional layer, a method involving joining with an adhesive, and a method for thermocompression bonding.

The substrate is, among those described above, preferably a porous substrate formed from at least one selected from the group consisting of polyethylene, polypropylene, polyimide, polyamide, polyethylene terephthalate, polyester, and polyacetal.

From the viewpoint of obtaining good mechanical physical characteristics and internal resistance, the film thickness of the substrate is preferably in the range of 5 to 50 μm. The upper limit of the film thickness is more preferably 40 μm, and further preferably 30 μm. In addition, the lower limit of the film thickness is more preferably 10 μm.

The Gurley value of the substrate is preferably 500 sec/100 cc Air or less, and more preferably 300 sec/100 cc Air or less. The Gurley value thereof is also preferably 50 sec/100 cc Air or more. The Gurley value is a value obtained by measurement with a Gurley densometer according to JIS P 8117.

The porosity of the substrate is preferably 30 to 70%, and more preferably 35 to 60%. The porosity is a value calculated by the following expression.

Porosity = (1 - sample mass (g)/(sample density (g/$cm^3$) × sample volume ($cm^3$))) × 100

The sample volume ($cm^3$) here is calculated by 10 cm × 10 cm × thickness (cm).

The average pore size of the substrate is preferably 0.01 to 0.5 μm, and more preferably 0.1 to 0.3 μm. The average pore size is determined as follows: a BET gas adsorption method is applied to measure the specific surface area ($m^2$/g) of the substrate, and this is multiplied by the basis weight (g/$m^2$) of the substrate to calculate the pore surface area S per $m^2$ of the substrate. Separately, the pore volume V per $m^2$ of the substrate is calculated from the porosity. By using the obtained values, the average pore size (diameter) d is calculated from the following expression.

$$d = 4 \cdot V/S$$

When the Gurley value, the porosity, and the average pore size of the substrate are within the above ranges, a separator having excellent ion permeability can be obtained, and a battery having good charge/discharge characteristics can be obtained.

The separator for an electrochemical device can be produced by coating a substrate with the composition. The coating method is not limited as long as it is a method that can cover a surface of a substrate with a coating layer formed from a composition, and examples thereof include a method involving coating a substrate with the composition and drying the resulting coating film. More specific examples of the coating method include a method involving roll coating a substrate with the composition, a method involving dipping a substrate in the composition, and a method involving applying the composition onto a substrate and immersing the substrate in an appropriate coagulating liquid for creation. In addition, a separator for an electrochemical device may be produced by creating a film by using the composition and laminating the obtained film and a substrate by a method such as lamination. Examples of a method for creating a film by using the composition include a method involving casting the composition onto a film having a smooth surface such as a polyester film or an aluminum film and then peeling off the film.

The Gurley value of the separator for an electrochemical device is preferably 500 sec/100 cc Air or less, and more preferably 300 sec/100 cc Air or less. The Gurley value thereof is also preferably 50 sec/100 cc Air or more. The Gurley value is a value obtained by measurement with a Gurley densometer according to JIS P 8117.

In the separator for an electrochemical device, the Gurley value increase rate is preferably 140% or less, more preferably 130% or less, and further preferably 120% or less. The Gurley value increase rate is also preferably 103% or more. The Gurley value increase rate can be determined from the following expression.

Gurley value increase rate (%) = (Gurley value of separator for electrochemical device/Gurley value of substrate only) × 100

(Electrochemical device)

The separator for an electrochemical device of the present disclosure can be applied to an electrochemical device. The electrochemical device of the present disclosure includes the separator for an electrochemical device described above.

Examples of the electrochemical device include a battery such as a secondary battery or a capacitor. The battery

may be a primary battery in some embodiments, and may be a storage battery (secondary battery) or an energy storage element in other embodiments. In some embodiments, the battery may be a non-aqueous electrolytic solution battery. The non-aqueous electrolytic solution battery includes all batteries including an electrolytic solution and a power generation element. Examples of the non-aqueous electrolytic solution battery include a lithium ion primary battery, a lithium ion secondary battery, a nickel hydrogen battery, a lithium ion capacitor, and an electric double layer capacitor.

The separator for an electrochemical device of the present disclosure can constitute a secondary battery together with a positive electrode, a negative electrode, and a non-aqueous electrolyte. The secondary battery is, among others, particularly preferably a lithium ion secondary battery. Hereinafter, representative configurations when the separator for an electrochemical device of the present disclosure is applied to a lithium ion secondary battery will be described, but the electrochemistry of the present disclosure is not limited to these configurations.

The positive electrode is composed of a positive electrode mixture including a positive electrode active material, which is a material of the positive electrode, and a current collector.

The positive electrode active material is not limited as long as it can electrochemically absorb and desorb a lithium ion. The positive electrode active material is preferably a substance containing lithium and at least one transition metal, and examples thereof include a lithium transition metal composite oxide such as a lithium-cobalt composite oxide, a lithium-nickel composite oxide, or a lithium-manganese composite oxide, and a lithium-containing transition metal phosphate compound.

The positive electrode mixture preferably further includes a binder, a thickener, and a conductive material.

The binder may be any material as long as the material is safe against the solvent and the electrolyte that are used when producing an electrode, and examples thereof include polyvinylidene fluoride, polytetrafluoroethylene, a vinylidene fluoride-tetrafluoroethylene copolymer, a vinylidene fluoride-hexafluoropropylene copolymer, a vinylidene fluoride-tetrafluoroethylene-hexafluoropropylene copolymer, polyethylene, polypropylene, styrene-butadiene elastomer, isoprene elastomer, butadiene elastomer, an ethylene-acrylic acid copolymer, and an ethylene-methacrylic acid copolymer.

Examples of the thickener include carboxymethylcellulose, methylcellulose, hydroxymethylcellulose, ethylcellulose, polyvinyl alcohol, oxidized starch, phosphorylated starch, and casein.

Examples of the conductive material for a positive electrode include a carbon material such as graphite or carbon black.

Examples of a material for a current collector for a positive electrode include a metal such as aluminum, titanium, or tantalum, and an alloy thereof. Among these, aluminum or an alloy thereof is preferable.

The positive electrode may be produced according to a conventional method. Examples thereof include a method involving adding a binder, a thickener, a conductive material, a solvent, or the like as described above to the positive electrode active material to form a slurry-like positive electrode mixture, applying the mixture to a current collector, drying the mixture, and then pressing the mixture to achieve high density.

The negative electrode is composed of a negative electrode mixture including a negative electrode material and a current collector.

Examples of the negative electrode material include a carbonaceous material that can absorb and desorb a lithium ion, such as a pyrolysate of an organic substance under various pyrolysis conditions, artificial graphite, or natural graphite; a metal oxide material that can absorb and desorb a lithium ion, such as tin oxide or silicon oxide; a lithium metal; and various lithium alloys. Two or more of these negative electrode materials may be mixed and used.

The carbonaceous material that can absorb and desorb a lithium ion is preferably artificial graphite or purified natural graphite produced by high-temperature treatment of graphitizable pitch obtained from various raw materials, or a material obtained by surface-treating such graphite with pitch or an other organic substance and then carbonizing the resulting graphite.

The negative electrode mixture preferably further includes a binder, a thickener, and a conductive material. Examples of the binder include the same binders as those that can be used for the positive electrode described above. Examples of the thickener include the same thickeners as those that can be used for the positive electrode described above. Examples of the conductive material for a negative electrode include a metal material such as copper or nickel; and a carbon material such as graphite or carbon black.

Examples of a material for a current collector for a negative electrode include copper, nickel, and stainless steel. Among these, copper is preferable from the viewpoint of ease of processing into a thin film and the cost.

The negative electrode may be produced according to a conventional method. Examples thereof include a method involving adding a binder, a thickener, a conductive material, a solvent, or the like as described above to the negative electrode material to form a slurry, applying the slurry to a current collector, drying the slurry, and then pressing the slurry to achieve high density.

The non-aqueous electrolyte may be a solution obtained by dissolving a known electrolyte salt in a known organic solvent for electrolyte salt dissolution.

The organic solvent for electrolyte salt dissolution is not limited, and may be one or two or more of a hydrocarbon-based solvent such as propylene carbonate, ethylene carbonate, butylene carbonate, γ-butyl lactone, 1,2-dimethoxyethane, 1,2-diethoxyethane, dimethyl carbonate, diethyl carbonate, ethyl methyl carbonate, or vinylene carbonate; and a fluorine-based solvent such as fluoroethylene carbonate, fluoroether, or fluorinated carbonate.

Examples of the electrolyte salt include $LiClO_4$, $LiAsF_6$, $LiBF_4$, $LiPF_6$, LiCl, LiBr, $CH_3SO_3Li$, $CF_3SO_3Li$, $LiN(SO_2CF_3)_2$, $LiN(SO_2C_2F_5)_2$, and cesium carbonate.

The concentration of the electrolyte salt is preferably 0.8 mol/liter or more, and more preferably 1.0 mol/liter or more. The upper limit thereof depends on the organic solvent for electrolyte salt dissolution, and is usually 1.5 mol/liter.

The lithium ion secondary battery may have any shape, and examples thereof include a shape such as a cylindrical shape, a square shape, a laminated shape, a coin shape, or a large-sized shape. The shapes and the configurations of a positive electrode, a negative electrode, and a separator can be changed according to the shape of each battery and used.

(Polymer)

The present disclosure also relates to a polymer containing trifluoroethylene unit, tetrafluoroethylene unit, and a monomer ($\alpha$) unit, wherein the monomer ($\alpha$) is at least one polymer selected from the group consisting of a fluorinated monomer, excluding trifluoroethylene and tetrafluoroethylene, and a polar group-containing monomer. Next, specific embodiments of this terpolymer will be described in detail.

The polymer of the present disclosure can have the same configuration as that of the polymer contained in the composition of the present disclosure, except that the polymer of the present disclosure contains tetrafluoroethylene unit and a monomer ($\alpha$) unit as essential monomer units in addition to trifluoroethylene unit, and preferably has the same configuration. Therefore, the polymer of the present disclosure can be suitably used as a polymer included in a composition for coating a separator for an electrochemical device.

The polymer of the present disclosure contains trifluoroethylene unit, tetrafluoroethylene unit, and a monomer ($\alpha$) unit, and thus when a separator is coated by using the polymer of the present disclosure, a coating having excellent electrolyte resistance can be formed, and the heat shrinkage resistance of the separator can be improved.

The content of the trifluoroethylene unit in the polymer is preferably 57 to 99 mol%, more preferably 60 mol% or more, further preferably 62 mol% or more, particularly preferably 65 mol% or more, and more preferably 98 mol% or less, further preferably 97 mol% or less, even further preferably 90 mol% or less, particularly preferably 80 mol% or less, based on all monomer units. In the polymer of the present disclosure, by setting the content of the trifluoroethylene unit to 57 to 99 mol%, the solubility of the polymer in a solvent such as N-methyl-2-pyrrolidone is remarkably improved, and a composition having an appropriate viscosity can be obtained. In addition, by setting the content of the trifluoroethylene unit to 65 mol% or more, the heat shrinkage resistance of the separator is further improved.

The content of the tetrafluoroethylene unit in the polymer of the present disclosure is preferably 1 to 43 mol%, more preferably 40 mol% or less, further preferably 38 mol% or less, particularly preferably 35 mol% or less, and more preferably 2 mol% or more, further preferably 10 mol% or more, particularly preferably 20 mol% or more, based on all monomer units.

The total content of the trifluoroethylene unit and the tetrafluoroethylene unit in the polymer of the present disclosure is more preferably 90 to 99.99 mol%, further preferably 92 mol% or more, particularly preferably 94 mol% or more, and further preferably 99 mol% or less, particularly preferably 98 mol% or less.

The content of the monomer ($\alpha$) unit in the polymer of the present disclosure is more preferably 10 to 0.01 mol, further preferably 8 mol% or less, particularly preferably 6 mol% or less, and further preferably 1 mol% or more, particularly preferably 2 mol% or more.

(Laminated product)

The present disclosure also relates to a laminated product including a substrate formed from an organic material and a coating layer formed from a composition. Next, specific embodiments of the laminated product of the present disclosure will be described in detail.

The laminated product of the present disclosure can have the same configuration as that of the separator for an electrochemical device of the present disclosure, except that the substrate is limited to one formed from an organic material, and preferably has the same configuration.

The laminated product of the present disclosure can be suitably used as a separator for an electrochemical device.

The laminated product of the present disclosure includes a substrate formed from an organic material and a coating layer formed from the composition described above. Therefore, the coating layer can be easily formed, and thus the laminated product of the present disclosure can be produced with high productivity. In addition, the coating layer has high electrolyte resistance, and thus the coating layer is unlikely to dissolve and swell even when in contact with an electrolyte used in a lithium ion secondary battery. Further, the laminated product of the present disclosure is unlikely to

shrink when exposed to a high temperature environment.

The embodiments have been described above, and it will be understood that various modifications of the embodiments and details are possible without departing from the spirit and scope of the claims.

EXAMPLES

Next, the embodiments of the present disclosure will be described with reference to Experimental Examples, but the present disclosure is not limited only to the Experimental Examples.

The numerical values in the Experimental Examples were measured by the following methods.

<Monomer formulation of polymer>

The monomer formulation of a polymer was measured in the state of an acetone or NMP solution of the polymer by $^{19}$F-NMR measurement by using an NMR analyzer (manufactured by Agilent Technologies, VNS 400 MHz). A polymer insoluble in acetone and NMP was subjected to $^{19}$F-NMR measurement at a measurement temperature of the melting point of the polymer + 20°C by using a nuclear magnetic resonance apparatus AC300 (manufactured by Bruker-Biospin), to determine the formulation from the integrated value of each peak.

<Weight average molecular weight>

The weight average molecular weight was measured by gel permeation chromatography (GPC). The weight average molecular weight was calculated from data (reference: polystyrene) obtained by measurement under a flow of dimethylformamide (DMF) as a solvent at a flow rate of 1.0 ml/min by using AS-8010, CO-8020, and columns (three GMHHR-H connected in series) manufactured by Tosoh Corporation and RID-10A manufactured by Shimadzu Corporation.

<Melting point>

The melting point was determined as the temperature corresponding to the maximum value in the heat of fusion curve when the temperature is raised from 50°C to 300°C at a rate of 10°C/min, then lowered to 30°C at 10°C/min, and raised again to 300°C at a rate of 10°C/min by using a differential scanning calorimetry (DSC) apparatus.

<Solution viscosity>

An NMP solution (5% by mass) of a polymer was prepared. The viscosity of the NMP solution 10 minutes after the start of measurement was measured by using a B-type viscometer (TV-10M, manufactured by Toki Sangyo Co., Ltd.) under conditions of 25°C, rotor No. M3, and a rotation speed of 30 rpm.

<Electrolyte resistance>

Each polymer was heated at a temperature higher than the melting point thereof and hot-pressed to obtain a sheet having a thickness of 100 to 150 μm. A part of the sheet was immersed in an ethylene carbonate (EC)/ethyl methyl carbonate (EMC) = 30/70 solution including 1.0 M $LiPF_6$ and left at 60°C for 5 days, and the sheet shape was visually checked and evaluated according to the following criteria. Results are shown in Table 1.

○: The sheet shape was maintained
×: The sheet shape was not maintained

<Heat shrinkage rate of separator>

The separator created in each Experimental Example was placed in an oven and heated at 140°C for 30 minutes. The area of the separator before and after heating was measured, and the heat shrinkage rate was calculated by the following expression.

Heat shrinkage rate (%) = (area of separator after heating)/(area of separator before heating) × 100

<Synthesis Example 1>

(Synthesis of trifluoroethylene-tetrafluoroethylene copolymer (polymer a))

61 g of pure water, 89 g of 1,1,2,2-tetrafluoro-1-(2,2,2-trifluoroethoxy)ethane (HFE-347pc-f), 9.6 g of trifluoroethylene, 0.3 g of tetrafluoroethylene, and 0.3 g of a methanol solution of 50% by mass of di-normal propyl peroxydicarbonate (hereinafter abbreviated as "NPP") as an initiator were fed into an autoclave having a volume of 300 mL, and the temperature thereof was raised to 35°C to carry out a polymerization reaction. A mixed gas of trifluoroethylene and tetrafluoroethylene (molar ratio (trifluoroethylene/tetrafluoroethylene) = 97/3) was added in such a way as to maintain the pressure at 0.35 MPa during the polymerization reaction. When the weight of the added gas reached 9 g, the monomers in the autoclave were purged, and the produced copolymer (polymer a) was recovered. Polymer a had a ratio of a polymerization unit based on trifluoroethylene/a polymerization unit based on tetrafluoroethylene of 97/3 (molar ratio) as measured by NMR measurement, a weight average molecular weight of 350,000 as measured by GPC measurement, and a melting point of 202°C as measured by DSC measurement.

<Synthesis Example 2>

(Synthesis of trifluoroethylene-tetrafluoroethylene copolymer (polymer b))

40 g of HFE-347pc-f, 12 g of trifluoroethylene, 2 g of tetrafluoroethylene, and 0.5 g of a perfluorohexane solution of 8% by mass of di(ω-hydro-dodecafluorohexanoyl) peroxide (hereinafter abbreviated as "DHP") as an initiator were fed into an autoclave having a volume of 100 mL, and the temperature thereof was raised to 25°C to carry out a polymerization reaction. The reaction was allowed to proceed until the pressure was reduced from 0.7 MPa to 0.5 MPa, the monomers in the autoclave were purged, and the produced copolymer (polymer b) was recovered. Polymer b had a ratio of a polymerization unit based on trifluoroethylene/a polymerization unit based on tetrafluoroethylene of 87/13 (molar ratio) as measured by NMR measurement, a weight average molecular weight of 290,000 as measured by GPC measurement, and a melting point of 220°C as measured by DSC measurement.

<Synthesis Example 3>

(Synthesis of trifluoroethylene-tetrafluoroethylene copolymer (polymer c))

61 g of pure water, 89 g of HFE-347pc-f, 7.6 g of trifluoroethylene, 2.7 g of tetrafluoroethylene, and 0.3 g of a methanol solution of 50% by mass of NPP as an initiator were fed into an autoclave having a volume of 300 mL, and the temperature thereof was raised to 35°C to carry out a polymerization reaction. A mixed gas of trifluoroethylene and tetrafluoroethylene (molar ratio (trifluoroethylene/tetrafluoroethylene) = 70/30) was added in such a way as to maintain the pressure at 0.35 MPa during the polymerization reaction. When the weight of the added gas reached 9 g, the monomers in the autoclave were purged, and the produced copolymer (polymer c) was recovered. Polymer c had a ratio of a polymerization unit based on trifluoroethylene/a polymerization unit based on tetrafluoroethylene of 69/31 (molar ratio) as measured by NMR measurement, a weight average molecular weight of 420,000 as measured by GPC measurement, and a melting point of 239°C as measured by DSC measurement.

<Synthesis Example 4>

(Synthesis of trifluoroethylene-tetrafluoroethylene-hexafluoropropylene copolymer (polymer d))

61 g of pure water, 89 g of HFE-347pc-f, 7.4 g of trifluoroethylene, 3.0 g of tetrafluoroethylene, 30 g of hexafluoropropylene, and 0.2 g of a methanol solution of 50% by mass of NPP as an initiator were fed into an autoclave having a volume of 300 mL, and the temperature thereof was raised to 35°C to carry out a polymerization reaction. A mixed gas of trifluoroethylene, tetrafluoroethylene, and hexafluoropropylene (molar ratio (trifluoroethylene/tetrafluoroethylene/hexafluoropropylene) = 66/30/4) was added in such a way as to maintain the pressure at 0.61 MPa during the polymerization reaction. When the weight of the added gas reached 9 g, the monomers in the autoclave were purged, and the produced copolymer (polymer d) was recovered. Polymer d had a ratio of a polymerization unit based on trifluoroethylene/a polymerization unit based on tetrafluoroethylene/a polymerization unit based on hexafluoropropylene of 62/33/5 (molar ratio) as measured by NMR measurement, a weight average molecular weight of 300,000 as measured by GPC measurement, and a melting point of 198°C as measured by DSC measurement.

<Synthesis Example 5>

(Synthesis of trifluoroethylene-tetrafluoroethylene-hexafluoropropylene copolymer (polymer e))

61 g of pure water, 89 g of HFE-347pc-f, 7.6 g of trifluoroethylene, 2.7 g of tetrafluoroethylene, 18 g of hexafluoropropylene, and 0.5 g of a methanol solution of 50% by mass of NPP as an initiator were fed into an autoclave having a volume of 300 mL, and the temperature thereof was raised to 35°C to carry out a polymerization reaction. A mixed gas of trifluoroethylene, tetrafluoroethylene, and hexafluoropropylene (molar ratio (trifluoroethylene/tetrafluoroethylene/hexafluoropropylene) = 70/28/2) was added in such a way as to maintain the pressure at 0.45 MPa during the polymerization reaction. When the weight of the added gas reached 9 g, the monomers in the autoclave were purged, and the produced copolymer (polymer e) was recovered. Polymer e had a ratio of a polymerization unit based on trifluoroethylene/a polymerization unit based on tetrafluoroethylene/a polymerization unit based on hexafluoropropylene of 67/31/2 (molar ratio) as measured by NMR measurement, a weight average molecular weight of 340,000 as measured by GPC measurement, and a melting point of 225°C as measured by DSC measurement.

<Synthesis Example 6>

Synthesis of trifluoroethylene-tetrafluoroethylene-2,3,3,3-tetrafluoropropene copolymer (polymer f))

61 g of pure water, 89 g of HFE-347pc-f, 7.4 g of trifluoroethylene, 3.0 g of tetrafluoroethylene, 0.2 g of 2,3,3,3-tetrafluoropropene, and 0.2 g of a methanol solution of 50% by mass of NPP as an initiator were fed into an autoclave having a volume of 300 mL, and the temperature thereof was raised to 35°C to carry out a polymerization reaction. A mixed gas of trifluoroethylene, tetrafluoroethylene, and 2,3,3,3-tetrafluoropropene (molar ratio (trifluoroethylene/tetrafluoroethylene/2,3,3,3-tetrafluoropropene) = 73/26/1) was added in such a way as to maintain the pressure at 0.35 MPa during the polymerization reaction. When the weight of the added gas reached 9 g, the monomers in the autoclave were purged, and the produced copolymer (polymer f) was recovered. Polymer f had a ratio of a polymerization unit based on trifluoroethylene/a polymerization unit based on tetrafluoroethylene/a polymerization unit based on 2,3,3,3-tetrafluoropropene of 69/29/2 (molar ratio) as measured by NMR measurement, a weight average molecular weight of 250,000 as measured by GPC measurement, and a melting point of 219°C as measured by DSC measurement.

<Synthesis Example 7>

(Synthesis of trifluoroethylene-tetrafluoroethylene-chlorotrifluoroethylene copolymer (polymer g))

61 g of pure water, 89 g of HFE-347pc-f, 7.4 g of trifluoroethylene, 3.0 g of tetrafluoroethylene, 0.5 g of chlorotrifluoroethylene, and 0.2 g of a methanol solution of 50% by mass of NPP as an initiator were fed into an autoclave having a volume of 300 mL, and the temperature thereof was raised to 35°C to carry out a polymerization reaction. A mixed gas of trifluoroethylene, tetrafluoroethylene, and chlorotrifluoroethylene (molar ratio (trifluoroethylene/tetrafluoroethylene/chlorotrifluoroethylene) = 67/31/2) was added in such a way as to maintain the pressure at 0.33 MPa during the polymerization reaction. When the weight of the added gas reached 9 g, the monomers in the autoclave were purged, and the produced copolymer (polymer g) was recovered. Polymer g had a ratio of a polymerization unit based on trifluoroethylene/a polymerization unit based on tetrafluoroethylene/a polymerization unit based on chlorotrifluoroethylene of 65/33/2 (molar ratio) as measured by NMR measurement, a weight average molecular weight of 450,000 as measured by GPC measurement, and a melting point of 226°C as measured by DSC measurement.

<Synthesis Example 8>

(Synthesis of trifluoroethylene-vinylidene fluoride copolymer (polymer h))

1,000 g of water, 500 g of R-113, 5 g of a perfluorohexane solution of 8% by mass of DHP as an initiator, 1 g of n-pentane, and a mixed gas of trifluoroethylene and vinylidene fluoride (molar ratio (trifluoroethylene/vinylidene fluoride) = 60/40) was added to an autoclave having a volume of 3 L until the pressure reached 0.54 MPaG, and a polymerization reaction was carried out at 20°C. A mixed gas of trifluoroethylene and vinylidene fluoride (molar ratio (trifluoroethylene/vinylidene fluoride) = 54/46) was added in such a way as to maintain the pressure at 0.54 MPaG, the reaction was allowed to proceed until the weight of the added mixed gas reached 380 g, the monomers in the autoclave were purged, and the produced copolymer (polymer h) was recovered. Polymer h had a ratio of a polymerization unit based on trifluoroethylene/a polymerization unit based on vinylidene fluoride of 54/46 (molar ratio) as measured by NMR measurement, a weight average molecular weight of 900,000 as measured by GPC measurement, and a melting point

of 162°C as measured by DSC measurement.

<Synthesis Example 9>

(Synthesis of trifluoroethylene-tetrafluoroethylene copolymer (polymer i))

61 g of pure water, 89 g of HFE-347pc-f, 6.9 g of trifluoroethylene, 3.6 g of tetrafluoroethylene, and 0.2 g of a methanol solution of 50% by mass of NPP as an initiator were fed into an autoclave having a volume of 300 mL, and the temperature thereof was raised to 35°C to carry out a polymerization reaction. The reaction was allowed to proceed until the pressure was reduced from 0.35 MPa to 0.34 MPa during the polymerization reaction, the monomers in the autoclave were purged, and the produced copolymer (polymer i) was recovered. Polymer i was insoluble in acetone and NMP. Polymer i had a ratio of a polymerization unit based on trifluoroethylene/a polymerization unit based on tetrafluoroethylene of 55/45 (molar ratio) as measured by fused state NMR measurement, and a melting point of 249°C as measured by DSC measurement.

Experimental Example 1

Polymer a and NMP were mixed to prepare a 6% by mass NMP solution of polymer a. In addition, NMP/water was mixed at a ratio of 55/45 to obtain a phase-separated liquid. Both surfaces of a polyethylene (PE) separator were coated with the NMP solution of polymer a, and the coated separator was immersed in the phase-separated liquid for 3 minutes. Next, the separator was immersed in water for 3 minutes and dried in an oven at 80°C for 30 minutes to produce a polymer-coated separator. The heat shrinkage rate was measured by using the produced separator. Results are shown in Table 1.

Experimental Examples 2 to 7

By using each of polymers b to g alone, a separator was produced in the same manner as in Experimental Example 1, and the heat shrinkage rate thereof was measured. Results are shown in Table 1.

Comparative Examples 1 and 2

By using each of polymers h and i alone, a separator was produced in the same manner as in Experimental Example 1, and the heat shrinkage rate thereof was measured. Results are shown in Table 1.

Comparative Example 3

By using a copolymer of vinylidene fluoride and hexafluoropropylene having a ratio of a polymerization unit based on vinylidene fluoride/a polymerization unit based on hexafluoropropylene of 93/7 (molar ratio), a weight average molecular weight of 220,000, and a melting point of 131°C, a separator was produced in the same manner as in Experimental Example 1, and the heat shrinkage rate thereof was measured. Results are shown in Table 1.

[Table 1]

Table 1

| | | | Experimental Examples | | | | | | | Comparative Examples | | |
|---|---|---|---|---|---|---|---|---|---|---|---|---|
| | | | 1 | 2 | 3 | 4 | 5 | 6 | 7 | 1 | 2 | 3 |
| Monomer formulation of polymer | 3FH | mol% | 97 | 87 | 69 | 62 | 67 | 69 | 65 | 54 | 55 | - |
| | VdF | mol% | - | - | - | - | - | - | - | 46 | - | 93 |
| | TFE | mol% | 3 | 13 | 31 | 33 | 31 | 29 | 33 | - | 45 | - |
| | HFP | mol% | - | - | - | 5 | 2 | - | - | - | - | 7 |
| | CTFE | mol% | - | - | - | - | - | - | 2 | - | - | - |
| | 1234yf | mol% | - | - | - | - | - | 2 | - | - | - | - |
| Melting point | | °C | 202 | 220 | 239 | 198 | 225 | 219 | 226 | 162 | 249 | 131 |
| 5% NMP solution viscosity | | mPa·s | 582 | 585 | 651 | 229 | 249 | 451 | 508 | 739 | * | 43 |
| Electrolyte resistance | | | ○ | ○ | ○ | ○ | ○ | ○ | ○ | ○ | ○ | × |
| Heat shrinkage rate of separator (140°C × 30 minutes) | | % | 24 | 30 | 33 | 22 | 25 | 24 | 28 | 19 | ** | 18 |

*Not measurable because of insolubility

**Not measured because of insolubility

Abbreviations in the table represent the following monomers, respectively.

3FH: Trifluoroethylene
VdF: Vinylidene fluoride
TFE: Tetrafluoroethylene
HFP: Hexafluoropropylene
CTFE: Chlorotrifluoroethylene
1234yf: 2,3,3,3-Tetrafluoropropene

## Claims

1. A composition for coating a separator for an electrochemical device, wherein

    the composition comprises a polymer comprising trifluoroethylene unit,
    a content of trifluoroethylene unit in the polymer is 57 to 100 mol% based on all monomer units, and
    when the polymer comprises an other monomer unit other than trifluoroethylene unit, the other monomer comprises at least

    - tetrafluoroethylene, or
    - tetrafluoroethylene and at least one monomer ($\alpha$) selected from the group consisting of a fluorinated monomer, excluding trifluoroethylene and tetrafluoroethylene, and a polar group-containing monomer.

2. The composition according to claim 1, wherein the fluorinated monomer is at least one selected from the group consisting of chlorotrifluoroethylene, 2,3,3,3-tetrafluoropropene, hexafluoropropylene, and a fluoroalkyl vinyl ether.

3. The composition according to claim 1 or 2, wherein the polar group-containing monomer is at least one selected from the group consisting of (meth)acrylic acid, 3-butenoic acid, 4-pentenoic acid, 2-carboxyethyl acrylate, hydroxyethyl acrylate, 2-hydroxypropyl acrylate, acryloyloxyethyl succinate, and a salt thereof.

4. The composition according to any one of claims 1 to 3, wherein the polymer is at least one selected from the group consisting of a polymer consisting of trifluoroethylene unit and tetrafluoroethylene unit and a polymer comprising trifluoroethylene unit, tetrafluoroethylene unit, and a monomer ($\alpha$) unit.

5. The composition according to claim 4, wherein a total content of trifluoroethylene unit and tetrafluoroethylene unit in the polymer is 90 to 100 mol% based on all monomer units, and a content of the monomer ($\alpha$) unit is 10 to 0 mol% based on all monomer units.

6. The composition according to any one of claims 1 to 5, wherein the polymer is free of vinylidene fluoride unit.

7. The composition according to any one of claims 1 to 6, further comprising a solvent.

8. A separator for an electrochemical device, comprising a substrate and a coating layer formed from the composition according to any one of claims 1 to 7.

9. The separator for an electrochemical device according to claim 8, wherein the substrate is formed from an organic material.

10. An electrochemical device comprising the separator for an electrochemical device according to claim 8 or 9.

11. A lithium ion secondary battery comprising the separator for an electrochemical device according to claim 8 or 9.

12. A polymer comprising trifluoroethylene unit, tetrafluoroethylene unit, and a monomer ($\alpha$) unit, wherein the monomer ($\alpha$) is at least one polymer selected from the group consisting of a fluorinated monomer, excluding trifluoroethylene and tetrafluoroethylene, and a polar group-containing monomer.

13. The polymer according to claim 12, wherein a content of trifluoroethylene unit in the copolymer is 57 to 99 mol% based on all monomer units.

**14.** The polymer according to claim 12 or 13, wherein a total content of trifluoroethylene unit and tetrafluoroethylene unit in the polymer is 90 to 99.99 mol% based on all monomer units, and a content of the monomer ($\alpha$) unit is 10 to 0.01 mol% based on all monomer units.

**15.** A laminated product comprising a substrate formed from an organic material and a coating layer formed from a composition, wherein

the composition comprises a polymer comprising trifluoroethylene unit,
a content of trifluoroethylene unit in the polymer is 57 to 100 mol% based on all monomer units, and
when the polymer comprises an other monomer unit other than trifluoroethylene unit, the other monomer includes at least

- tetrafluoroethylene, or
- tetrafluoroethylene and at least one monomer ($\alpha$) selected from the group consisting of a fluorinated monomer, excluding trifluoroethylene and tetrafluoroethylene, and a polar group-containing monomer.

## INTERNATIONAL SEARCH REPORT

International application No.
**PCT/JP2022/039692**

**A. CLASSIFICATION OF SUBJECT MATTER**

***H01M 50/403***(2021.01)i; ***C08F 214/26***(2006.01)i; ***H01M 50/411***(2021.01)i; ***H01M 50/426***(2021.01)i; ***H01M 50/449***(2021.01)i
FI: H01M50/403 D; H01M50/426; H01M50/449; H01M50/411; C08F214/26

According to International Patent Classification (IPC) or to both national classification and IPC

**B. FIELDS SEARCHED**

Minimum documentation searched (classification system followed by classification symbols)

H01M50/403; C08F214/26; H01M50/411; H01M50/426; H01M50/449

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-154056 A (FUJIMORI KOGYO CO) 04 October 2018 (2018-10-04) claims, paragraphs [0034]-[0064] | 15 |
| A | claims, paragraphs [0034]-[0064] | 1-14 |
| A | JP 8-231645 A (ELF ATOCHEM SA) 10 September 1996 (1996-09-10) entire text, all drawings | 1-15 |
| A | JP 2012-221741 A (TEIJIN LTD) 12 November 2012 (2012-11-12) entire text, all drawings | 1-15 |
| A | WO 2012/137375 A1 (TEIJIN LTD) 11 October 2012 (2012-10-11) entire text, all drawings | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 January 2023** | **17 January 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/039692**

| Patent document cited in search report | Publication date (day/month/year) | Patent family member(s) | Publication date (day/month/year) |
|---|---|---|---|
| JP 2018-154056 A | 04 October 2018 | US 2020/0031105 A1<br>claims, paragraphs [0074]-[0135]<br>WO 2018/167556 A1<br>EP 3597422 A1<br>CN 110582401 A | |
| JP 8-231645 A | 10 September 1996 | US 5744561 A<br>all<br>EP 708118 A1<br>FR 2725722 A1 | |
| JP 2012-221741 A | 12 November 2012 | (Family: none) | |
| WO 2012/137375 A1 | 11 October 2012 | US 2013/0089770 A1<br>all<br>EP 2696391 A1<br>KR 10-2013-0036043 A<br>CN 103155219 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8231645 A
- JP 2008524824 W